# EUROPÄISCHE PATENTSCHRIFT

(11) **EP 0 456 894 B1**
(45) Veröffentlichungstag und Bekanntmachung des Hinweises auf die Patenterteilung: **31.08.1994**
(21) Anmeldenummer: 90123051.6
(22) Anmeldetag: 01.12.1990
(51) Int. Cl.: B60K 26/04

(54) **Motorsteuereinrichtung**
Engine control device
Dispositif de contrôle de moteur

(30) Priorität: 14.05.1990 DE 4015423
(43) Veröffentlichungstag der Anmeldung: 21.11.1991
(73) Patentinhaber: ROBERT BOSCH GMBH, 70442 Stuttgart (DE)
(72) Erfinder: Lieberoth-Leden, Bernd, Dr.-Ing., W-7250 Leonberg (DE); Norgauer, Rainer, Dipl.-Ing., D-96049 Bamberg (DE)

(56) Entgegenhaltungen:
- DE-A- 3 628 538
- DE-A- 3 641 244
- DE-C- 3 900 437
- DE-U- 8 602 379

## Beschreibung

### Stand der Technik

Die Erfindung geht aus von einer Motorsteuereinrichtung.

Bei einer bekannten Motorsteuereinrichtung ist ein Zurückstellen des Fahrpedals nicht unter allen Betriebsbedingungen, zum Beispiel bei erhöhter Reibung wegen großer Kälte, sichergestellt. Desweiteren muß im normalen Fahrbetrieb das Fahrpedal entgegen einer großen Rückstellkraft betätigt werden.

Die DE-C-39 00 437 zeigt eine Motorsteuereinrichtung, bei der eine Stellbewegung eines Fahrpedals über einen Bowdenzug auf ein Anlenkstück übertragen wird. Ein Sollwertgeber sensiert die Stellung des Anlenkstücks und ermittelt dadurch den vom Fahrpedal vorgegebenen Wert. Wegen dem Sollwertgeber am Anlenkstück ist es erforderlich, daß die Stellung des Anlenkstücks genau der Stellung des Fahrpedals entspricht. Soll die Position des Fahrpedals über einen Bowdenzug auf das Anlenkstück übertragen werden, so ist es erforderlich, daß eine Rückholfeder das Anlenkstück ständig in Schließrichtung beaufschlagt. Wegen dieser Rückholfeder ergibt sich ständig ein erhöhter Reibwert zwischen dem Bowdenzugseil und dem Bowdenzugmantel und das Fahrpedal muß zusätzlich ständig gegen diese Rückholfeder betätigt werden. Diese erhöhte Stellkraft des Fahrpedals ergibt sich auch dann, wenn das Stellglied über den Stellantrieb rein elektrisch verstellt wird. Bei dieser Motorsteuereinrichtung kann bei Ausfall des Stellantriebs die Stellbewegung des Anlenkstücks über mechanische Übertragungsmittel auf das Stellglied übertragen werden. Die mechanischen Übertragungsmittel haben eine klammerartige Aussparung in die das Stellglied eingreift. Die klammerartige Aussparung der Übertragungsmittel ist mit Hilfe einer Koppelfeder an das Anlenkstück gekoppelt. Bei dieser hier gezeigten Motorsteuereinrichtung muß das Anlenkstück mit dem Sollwertgeber direkt im Bereich der Drosselklappe angeordnet sein.

### Vorteile der Erfindung

Die erfindungsgemäße Einrichtung mit den Merkmalen des Hauptanspruchs hat demgegenüber insbesondere folgende Vorteile:
Die Rückholfeder zum Zurückstellen des Fahrpedals kann vorteilhafterweise relativ schwach sein.

In vorteilhafter Weise ist sichergestellt, daß ein zur Erfassung einer Stellung des Fahrpedals dienender Sollwertgeber unter allen Umständen, insbesondere auch bei nicht betätigtem Fahrpedal, dessen wirklichen Betätigungszustand erkennen kann.

Die erfindungsgemäße Motorsteuereinrichtung bietet die Voraussetzung, die Konstruktion so auszuführen, daß vorteilhafterweise das Fahrpedal mit außerordentlich kleiner Kraft betätigbar ist.

Zum Verstellen des Stellgliedes in Richtung kleinerer Leistung der Antriebsmaschine ist vorteilhafterweise eine relativ schwache Rückstellfeder erforderlich. Die die zweite Steuergruppe mit der ersten Steuergruppe verbindenden mechanischen Übertragungsmittel müssen Kräfte vorteilhafterweise nur in einer Richtung übertragen. Dies ist insbesondere von Vorteil, wenn die mechanischen Übertragungsmittel in Form eines Bowdenzuges ausgebildet sind, denn für den Bowdenzug ist es günstig, wenn damit keinerlei Druckkräfte übertragen werden müssen.

Zum Verstellen des Stellgliedes mit Hilfe des Stellantriebs sind vorteilhafterweise nur kleine Kräfte bzw. Stellmomente erforderlich.

Eine automatische Fahrgeschwindigkeitsregelung hat vorteilhafterweise keine Auswirkung auf die mechanischen Übertragungsmittel.

Durch die in den Unteransprüchen aufgeführten Maßnahmen sind vorteilhafte Weiterbildungen und Verbesserungen der im Hauptanspruch angegebenen Einrichtung möglich.

Mit Hilfe der Trennstelle und der Koppelfeder zwischen dem zweiten Anlenkstück und dem Stellglied kann in vorteilhafterweise das Stellglied von dem Stellantrieb in Richtung kleinerer Leistung der Antriebsmaschine verstellt werden, ohne Behinderung durch das Fahrpedal.

Greift die Rückstellfeder an dem Anlenkstück an, so ermöglicht dies vorteilhafterweise die Verwendung einer relativ schwachen Koppelfeder.

Durch den Notleerlaufanschlag, an dem das zweite Anlenkstück zur Anlage kommen kann, ist ein sicherer Notleerlauf der Antriebsmaschine in vorteilhafter Weise sichergestellt.

### Zeichnung

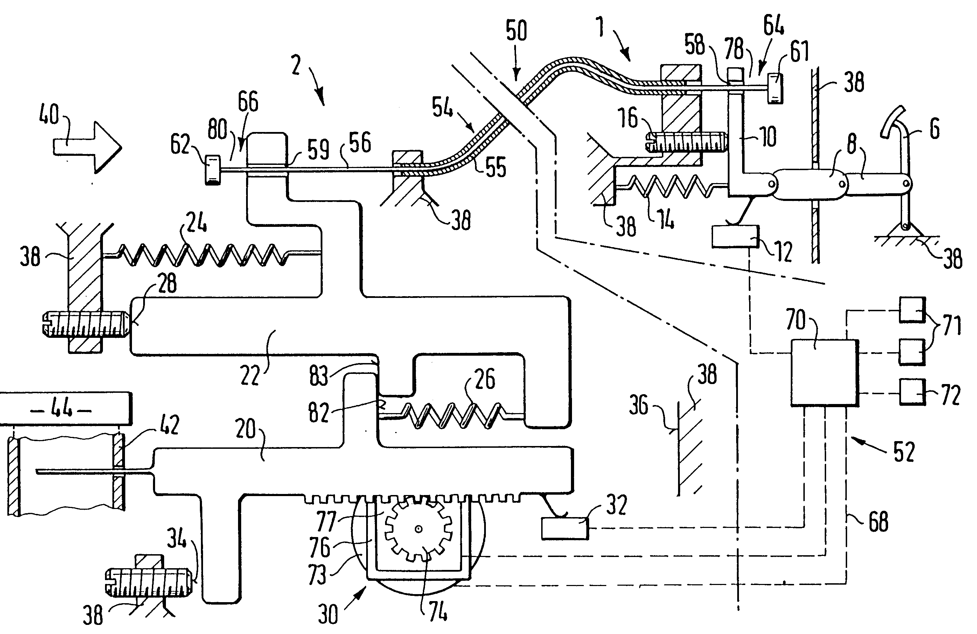

Ein Ausführungsbeispiel der Erfindung ist in der Zeichnung vereinfacht dargestellt und in der nachfolgenden Beschreibung näher erläutert.

### Beschreibung des Ausführungsbeispiels

Aufbau und Wirkungsweise einer erfindungsgemäß ausgebildeten Motorsteuereinrichtung in einem Fahrzeug zur Übertragung einer Stellposition eines Fahrpedals auf eine Stellposition eines eine Leistung einer Antriebsmaschine bestimmenden Stellgliedes soll anhand eines Ausführungsbeispiels mit Hilfe der Zeichnung näher erläutert werden.

Die erfindungsgemäße Motorsteuereinrichtung umfaßt im wesentlichen eine erste Steuergruppe 1 und eine zweite Steuergruppe 2. Zwecks Verdeutlichung sind in der Zeichnung zwei zwischen der ersten Steuergruppe 1 und der zweiten Steuergruppe 2 verlaufende strichpunktierte Linien eingezeichnet.

Die erste Steuergruppe 1 umfaßt im wesentlichen ein Fahrpedal 6, ein Übertragungselement 8 oder mehrere Übertragungselemente 8, ein erstes Anlenkstück 10, einen Sollwertgeber 12 oder mehrere Sollwertgeber 12, eine Rückholfeder 14 und einen einstellbaren Ruheanschlag 16.

Die zweite Steuergruppe 2 umfaßt im wesentlichen ein Stellglied 20, ein zweites Anlenkstück 22, eine Rückstellfeder 24, eine Koppelfeder 26, einen Notleerlaufanschlag 28, einen Stellantrieb 30, einen Istwertgeber 32 oder mehrere Istwertgeber 32, einen Endanschlag 34 und einen Vollastanschlag 36.

Einzelne, mit der erfindungsgemäßen Motorsteuereinrichtung zusammenarbeitende fahrzeugfeste Teile des Fahrzeuges werden nachfolgend mit Basis 38 bezeichnet. Der Ruheanschlag 16, der Notleerlaufanschlag 28, der Endanschlag 34 und der Vollastanschlag 36 sind an der Basis 38 vorgesehen, bzw. zum Beispiel mit Hilfe von Einstellschrauben gegenüber der Basis 38 einstellbar.

In der Zeichnung ist ein Pfeil 40 dargestellt. Die Bewegungsrichtungen des Fahrpedals 6, der Übertragungselemente 8, des ersten Anlenkstücks 10, des zweiten Anlenkstücks 22 und des Stellgliedes 20 verlaufen parallel zum Pfeil 40.

Die Stellung des Stellgliedes 20 bestimmt einen freien Querschnitt in einem Saugrohr 42. Somit kann über das Stellglied 20 eine zu einer Antriebsmaschine 44 fließende Strömung beeinflußt und damit die Leistung der Antriebsmaschine 44 gesteuert werden. Eine Verstellung des Stellgliedes 20 in Richtung des Pfeils 40 bedeutet eine Vergrößerung des freien Querschnitts im Saugrohr 42 und damit eine Vergrößerung der Leistung der Antriebsmaschine 44 und eine Verstellung des Stellgliedes 20 entgegen Pfeil 40 bedeutet eine Verkleinerung der Leistung der Antriebsmaschine 44.

Die zweite Steuergruppe 2 ist über mechanische Übertragungsmittel 50 und über elektrische Übertragungsmittel 52 mit der ersten Steuergruppe 1 verbunden.

In dem dargestellten Ausführungsbeispiel umfassen die mechanischen Übertragungsmittel 50 einen Bowdenzug 54 mit einem Bowdenzugmantel 55 und einem Bowdenzugseil 56. Das erste Anlenkstück 10 hat eine Aussparung 58 und das zweite Anlenkstück 22 hat eine Aussparung 59. Das Bowdenzugseil 56 verläuft durch die beiden Aussparungen 58, 59. Auf der dem zweiten Anlenkstück 22 abgewandten Seite des ersten Anlenkstücks 10 hat das Bowdenzugseil 56 eine erste Verdickung 61, und auf der dem ersten Anlenkstück 10 abgewandten Seite des zweiten Anlenkstücks 22 hat das Bowdenzugseil 56 eine zweite Verdickung 62. Die beiden Verdickungen 61, 62 sind so ausgeführt, daß sie während des Betriebs der Motorsteuereinrichtung nicht durch die Aussparung 58 bzw. 59 hindurchrutschen können. Der Bowdenzugmantel 55 ist an der Basis 38 fixiert und führt das Bowdenzugseil 56.

Das erste Anlenkstück 10 ist über die Übertragungselemente 8 mit dem Fahrpedal 6 verbunden. Es ist aber auch möglich, das erste Anlenkstück 10 direkt mit dem Fahrpedal 6 zu verbinden oder es kann auch die Aussparung 58 zur Ankopplung der mechanischen Übertragungsmittel 50 direkt an dem Fahrpedal 6 vorgesehen sein. Der Sollwertgeber 12 ist so vorgesehen, daß er direkt oder indirekt die Stellung des Fahrpedals 6 ermittelt.

Die Rückholfeder 14 wirkt einerseits auf die Basis 38 und andererseits auf das erste Anlenkstück 10 und damit auch auf die Übertragungselemente 8 und auf das Fahrpedal 6 entgegen Pfeil 40. Bei nicht betätigtem Fahrpedal 6 verstellt die Rückholfeder 14 das Fahrpedal 6, die Übertragungselemente 8 und das erste Anlenkstück 10 entgegen Pfeil 40, bis das Anlenkstück 10 oder die Übertragungselemente 8 oder das Fahrpedal an dem Ruheanschlag 16 zur Anlage kommt.

Das Bowdenzugseil 56 bildet im Bereich des Endes mit der ersten Verdickung 61 zusammen mit dem ersten Anlenkstück 10 mit der Aussparung 58 einen ersten Freilauf 64. Im Bereich des anderen Endes des Bowdenzugseils 56 mit der zweiten Verdickung 62 wird im Zusammenspiel mit dem zweiten Anlenkstück 22 und der Aussparung 59 ein zweiter Freilauf 66 gebildet. Der erste Freilauf 64 ist so ausgebildet, daß von dem Bowdenzugseil 56 auf das erste Anlenkstück 10 in Richtung des Pfeiles 40 bzw. von dem ersten Anlenkstück 10 auf das Bowdenzugseil 56 entgegen Pfeil 40 keine oder so gut wie keine nennenswerten Kräfte übertragbar sind. Der zweite Freilauf 66 ist so gestaltet, daß von dem Bowdenzugseil 56 auf das zweite Anlenkstück 22 entgegen Pfeil 40 bzw. von dem zweiten Anlenkstück 22 auf das Bowdenzugseil 56 in Pfeilrichtung 40 keine oder so gut wie keine Kräfte übertragbar sind.

Insbesondere wegen dem Freilauf 64 kann die Rückholfeder 14 schwach ausgebildet sein und trotzdem ist ein sicheres Zurückholen des Fahrpedals 6 bei nicht betätigtem Fahrpedal 6 sichergestellt. Damit ist ein ungewolltes Verbleiben des Fahrpedals 6 in einer einer Teillast oder Vollast der Antriebsmaschine 44 entsprechenden Stellung in vorteilhafter Weise ausgeschlossen, und der Sollwertgeber 12 kann vorteilhafterweise stets den wahren Willen des Fahrers erkennen. Die Gefahr eines Klemmens von mechanischen Bauteilen wird auf ein Minimum reduziert.

Die elektrischen Übertragungsmittel 52 umfassen elektrische Leitungen 68 und eine elektrische Steuerung 70, sowie normalerweise auch noch einen Sensor 71 ode mehrere Sensoren 71 und einen Geber 72. Die Sensoren 71 dienen zum Beispiel zum Erfassen eines Antriebsschlupfes zwischen Antriebsrädern und einem Fahruntergrund, zum Erfassen einer Temperatur und/oder Drehzahl der Antriebsmaschine 44, einer Fahrgeschwindigkeit des Fahrzeugs oder einer anderen Größe, welche einen Einfluß auf die Steuerung der Antriebsmaschine 44 haben soll. Die elektrischen Leitungen 68 sind in der Zeichnung zwecks Übersichtlichkeit gestrichelt dargestellt. Der Stellantrieb 30 umfaßt einen Stellmotor 73 und ein von dem Stellmotor 73 angetriebenes Ritzel 74. Bei Bedarf kann zwischen dem Stellmotor 73 und dem Ritzel 74 noch ein Getriebe 76 und/oder eine schaltbare Kupplung 77 zwischengeschaltet sein. Der Sollwertgeber 12, der Istwertgeber 32, der Sensor 71, der Geber 72, der Stellmotor 73 und die schaltbare Kupplung 77 sind über die Leitungen 68 mit der elektrischen Steuerung 70 verbunden.

Je nach Stellung des Fahrpedals 6 gibt der Sollwertgeber 12 ein Steuersignal an die Steuerung 70 ab. Dieses Steuersignal wird mit einem von dem Istwertgeber 32 abgegebenen Steuersignal verglichen und dementsprechend wird der Stellmotor 73 des Stellantriebs 30 angesteuert, bis das Stellglied 20 die der Stellung des Fahrpedals 6 entsprechende Stellung eingenommen hat. Daneben kann die Stellung des Stellgliedes 20 auch noch von dem Sensor 71 und dem Geber 72 beeinflußt werden. Die Übertragung der Stellung des Fahrpedals 6 auf das Stellglied 20 kann anhand verschiedener Übertragungsfunktionen geschehen. Die Übertragungsfunktionen können zum Beispiel linear, progressiv, degressiv oder sonstwie je nach Bedarf gewählt werden.

Je nach Stellung des ersten Anlenkstücks 10 und des Bowdenzugseils 56 gibt es zwischen dem ersten Anlenkstück 10 und der ersten Verdickung 61 ein mehr oder weniger großes erstes Betätigungsspiel 78. Je nach Stellung des Bowdenzugseils 56 und des zweiten Anlenkstücks 22 gibt es zwischen dem zweiten Anlenkstück 22 und der zweiten Verdickung 62 ein mehr oder weniger großes zweites Betätigungsspiel 80. Die Summe aus dem ersten Betätigungsspiel 78 plus dem zweiten Betätigungsspiel 80 erhält nachfolgend die Bezeichnung Spiel.

Die Rückstellfeder 24 wirkt einerseits auf die Basis 38 und andererseits auf das zweite Anlenkstück 22 mit dem Bestreben, das zweite Anlenkstück 22 entgegen Pfeil 40 gegen den Notleerlaufanschlag 28 zu betätigen. Die Koppelfeder 26 wirkt einerseits auf das Stellglied 20 in Pfeilrichtung 40 und andererseits auf das zweite Anlenkstück 22 entgegen Pfeil 40, mit dem Bestreben, einen an dem Stellglied 20 vorgesehenen Koppelanschlag 82 gegen einen an dem zweiten Anlenkstück 22 vorgesehenen Koppelanschlag 83 zu betätigen.

Bei in Ruhestellung sich befindendem Fahrpedal liegt, falls über den Stellantrieb 30 nicht auf das Stellglied 20 eingegriffen wird, das zweite Anlenkstück 22 an dem Notleerlaufanschlag 28 und der Koppelanschlag 82 liegt an dem Koppelanschlag 83. In diesem Fall wird die Leistung der Antriebsmaschine 44 von dem Notleerlaufanschlag 28 bestimmt. Der Notleerlaufanschlag ist vorzugsweise so eingestellt, daß die Antriebsmaschine 44 unter allen Bedingungen, zum Beispiel auch bei großer Kälte, mit Sicherheit mit ausreichender Drehzahl arbeitet. Die Leistung der Antriebsmaschine 44 wird nur im Notfall von dem Notleerlaufanschlag 28 bestimmt, denn mit Hilfe des Stellantriebs 30 kann, je nach Wunsch und je nach den von den Sensoren 71 ermittelten Daten, auch bei nichtbetätigtem Fahrpedal 6 die Drehzahl der Antriebsmaschine 44 gesenkt und angehoben werden. Soll die Drehzahl gesenkt werden, so kann der Stellantrieb 30 das Stellglied 20 entgegen der Koppelkraft der Koppelfeder 26, d. h. entgegen Pfeil 40, betätigen. Dabei hebt der Koppelanschlag 82 von dem Koppelanschlag 83 ab. Die Leistung der Antriebsmaschine 44 kann aber auch angehoben werden. Dies geschieht dadurch, daß der Stellantrieb 30 das Stellglied 20 in Pfeilrichtung 40 entgegen der Kraft der Rückstellfeder 24 betätigt. Dabei hebt das zweite Anlenkstück 22 von dem Notleerlaufanschlag 28 ab. Wegen dem Freilauf 66 hat eine Verstellung des Stellgliedes 20 mit Hilfe des Stellantriebs 30 in Richtung größerer Leistung keinen Einfluß auf das Bowdenzugseil 56 der mechanischen Übertragungsmittel 50.

Nachfolgend wird zwischen einem normalen Fahrbetrieb und einem Notfahrbetrieb unterschieden. Im normalen Fahrbetrieb wird eine Betätigung des Fahrpedals 6 von der ersten Steuergruppe 1 über die elektrischen Übertragungsmittel 52 auf das Stellglied 20 der zweiten Steuergruppe 2 mit Hilfe des Stellantriebs 30 übertragen. Sollten die elektrischen Übertragungsmittel 52 bzw. der Stellantrieb 30 aus irgendeinem Grunde ausfallen, so kann im Notfahrbetrieb eine Betätigung des Fahrpedales 6 über die mechanischen Übertragungsmittel 50 auf die zweite Steuergruppe 2 und damit auf das Stellglied 20 übertragen werden.

Wird im normalen Fahrbetrieb das Fahrpedal 6 betätigt, so wird dem Stellantrieb 30 ein entspechendes elektrisches Stellsignal zugeleitet, und der Stellantrieb 30 verstellt das Stellglied 20 entsprechend der der elektrischen Steuerung 70 eingegebenen Übertragungsfunktion. Das aus den beiden Betätigungsspielen 78, 80 sich zusammensetzende Spiel wird in Abhängigkeit der der elektrischen Steuerung 70 eingegebenen Übertragungsfunktionen vorzugsweise so groß gewählt, daß das Spiel bei jeder Stellung des Fahrpedals 6 größer Null ist.

Bei Beginn einer Betätigung des Fahrpedals 6 gegen die Kraft der Rückholfeder 14 hebt zunächst das erste Anlenkstück 10 von dem Ruheanschlag 16 ab. Nach Überwindung des ersten Betätigungsspiels 78 kommt das erste Anlenkstück 10 an der ersten Verdickung 61 zur Anlage. Bei weiterer Betätigung des Fahrpedals 6 in Pfeilrichtung 40 wird über das erste Anlenkstück 10 auch das Bowdenzugseil 56 mitbetätigt. Da jedoch im normalen Fahrbetrieb das Stellglied 20 und das zweite Anlenkstück 22 mit Hilfe des Stellantriebs 30 ebenfalls in Pfeilrichtung 40 betätigt werden, kommt die zweite Verdickung 62 des Bowdenzugseils 56 an dem zweiten Anlenkstück 22 nicht zur Anlage. Somit muß im normalen Fahrbetrieb das Fahrpedal 6 im wesentlichen nur gegen die Kraft der Rückholfeder 14 und gegen die Reibkraft zwischen dem Bowdenzugseil 56 und dem Bowdenzugmantel 55 in Pfeilrichtung 40 betätigt werden. Diese besonders geringe Betätigungskraft ist für einen das Fahrpedal 6 betätigenden Fahrer besonders angenehm. Beim Loslassen des Fahrpedals 6 muß die Rückholfeder 14 nur die Reibung im Bereich des ersten Anlenkstücks 10, der Übertragungselemente 8, des Sollwertgebers 12 und des Fahrpedals 6 überwinden. Dies hat den besonderen Vorteil, daß die Rückholfeder 14 relativ schwach ausgeführt sein kann und trotzdem ist ein sicheres Zurückstellen des Fahrpedals 6 und des Sollwertgebers 12 entgegen Pfeil 40 gewährleistet.

Bei Betätigung des Fahrpedals 6 im Notfahrbetrieb, das heißt, wenn eine Verstellung des Stellgliedes 20 mit Hilfe des Stellantriebs 30 entfällt, wird nach Überwindung des ersten Betätigungsspiels 78 das Bowdenzugseil 56 ebenfalls in Pfeilrichtung 40 betätigt. Nach Überwindung des zweiten Betätigungsspiels 80 zwischen der Verdickung 62 und dem zweiten Anlenkstück 22 wird das zweite Anlenkstück 22 zusammen mit dem Stellglied 20 gegen die Kraft der Rückstellfeder 24 ebenfalls in Pfeilrichtung 40 betätigt. Bei der erfindungsgemäßen Motorsteuereinrichtung muß nur im Notfahrbetrieb das Fahrpedal 6 mit etwas erhöhter Pedalkraft betätigt werden. Da der Notfahrbetrieb so gut wie nie auftritt, ist die erhöhte Pedalkraft während des Notfahrbetriebs kein Nachteil. Zwecks Reduzierung der Pedalkräfte im Notfahrbetrieb ist die Kupplung 77 vorzugsweise so geschaltet, daß der Stellmotor 73 und das Getriebe 76 von dem Stellglied 20 abgekuppelt sind.

Neben den bereits beschriebenen Fahrbetrieben ist auch noch eine automatische Fahrgeschwindigkeitsregelung möglich. Über den Geber 72 kann auch bei nichtbetätigtem Fahrpedal 6 eine gewünschte Fahrgeschwindigkeit vorgegeben werden. In diesem Fall verstellt der Stellantrieb 30 das Stellglied 20 parallel zum Pfeil 40, bis der Sensor 71 feststellt, daß die gewünschte Fahrgeschwindigkeit erreicht ist. Bei jeder Veränderung der Fahrgeschwindigkeit wird das Stellglied 20 entsprechend nachgestellt. Wegen dem zweiten Freilauf 66 muß dabei der Stellantrieb 30 in vorteilhafterweise im wesentlichen nur die Reibungskräfte im Bereich des Stellgliedes 20 und des zweiten Anlenkstücks 22 und die Kraft der Rückstellfeder 24 überwinden.

Sollte im normalen Fahrbetrieb bzw. während der automatischen Fahrgeschwindigkeitsregelung eine schnelle Reduzierung der Antriebsleistung der Antriebsmaschine 44 erforderlich sein, zum Beispiel weil einer der Sensoren 71 einen unzulässig großen Antriebsschlupf zwischen nicht dargestellten Antriebsrädern und einem nicht dargestellen Fahruntergrund feststellt, so kann der Stellantrieb 30 das Stellglied 20 im gewünschten Maße entgegen Pfeil 40 verstellen. Dabei kann es im normalen Fahrbetrieb vorkommen, daß das Stellglied 20 um mehr als die Summe aus den beiden Betätigungsspielen 78, 80 entgegen Pfeil 40 verstellt werden muß. In diesem Fall kann der Stellantrieb 30, nach Überwindung der Betätigungsspiele 78, 80, das Stellglied 20 entgegen der Koppelkraft der Koppelfeder 26 entgegen Pfeil 40 betätigen. Dabei hebt der Koppelanschlag 82 des Stellgliedes 20 von dem Koppelanschlag 83 des zweiten Anlenkstücks 22 ab. Damit ist über die Betätigungsspiele 78, 80 hinaus eine Reduzierung der Leistung der Antriebsmaschine 44 möglich.

Bei der beispielhaft beschriebenen erfindungsgemäßen, besonders vorteilhaften Motorsteuereinrichtung ist das Stellglied 20 gegenüber dem zweiten Anlenkstück 22 entgegen Pfeil 40 gegen die Kraft der Koppelfeder 26 verstellbar. In einer vereinfachten Ausführung der erfindungsgemäßen Motorsteuereinrichtung ist es aber auch möglich, das Stellglied 20 fest mit dem zweiten Anlenkstück 22 zu koppeln.

Bei dieser vereinfachten Ausführungsform kann das Stellglied 20 mit Hilfe des Stellantriebs 30 nur maximal so weit entgegen Pfeil 40 betätigt werden, bis die Betätigungsspiele 78, 80 überwunden sind. Darüberhinaus kann der Stellantrieb 30 das Stellglied 20 entgegen Pfeil 40 nur so weit betätigen, wie es von der das Fahrpedal 6 bedienenden Person zugelassen wird.

Die mechanischen Übertragungsmittel 50 umfassen in dem dargestellten Ausführungsbeispiel den Bowdenzugmantel 55 und das Bowdenzugseil 56. Vorteilhafterweise werden durch das Bowdenzugseil 56 nur Zugkräfte übertragen, selbst geringe Druckkräfte können entfallen. Es ist aber auch möglich, anstatt dem Bowdenzugseil 56 ein beliebiges Seil und anstatt dem Bowdenzugmantel 55 zum Beispiel Seilrollen zu verwenden. Es ist aber auch möglich, die mechanischen Übertragungsmittel 50 in Form eines Gestänges auszubilden. Das Gestänge kann dann zum Beispiel so ausgeführt sein, daß über das Gestänge zum Beispiel nur Zugkräfte oder auch nur Druckkräfte übertragen werden. In jedem Fall sind zwischen den mechanischen Übertragungsmitteln 50 und den Steuergruppen 1, 2 in erfinderische Weise die Freiläufe 64, 66 vorgesehen.

Mit Hilfe der Übertragungselemente 8 ist es möglich, das Fahrpedal 6 im Fahrgastraum und das erste Anlenkstück 10, den Sollwertgeber 12 und die Rückholfeder 14 im Motorraum anzuordnen. Die Übertragungselemente 8 können zum Beispiel ein Seil oder ein Gestänge sein. Es ist auch möglich, die Rückholfeder 14 und/oder den Sollwertgeber 12 direkt am Fahrpedal 6 anzuordnen. In der Zeichnung ist eine Trennwand mit dem Bezugszeichen 38 zwischen dem Fahrgastraum und dem Motorraum angedeutet.

Die erfindungsgemäße Motorsteuereinrichtung wurde anhand eines Ausführungsbeispiels erläutert, bei dem die sich bewegenden Bauteile im wesentlichen geradlinige Bewegungen parallel zum Pfeil 40 ausführen können. Genausogut möglich und bei vielen Anwendungsfällen eher günstiger ist es, zum Beispiel das zweite Anlenkstück 22 und das Stellglied 20 an Drehachsen drehbar zu lagern, wobei es besonders zweckmäßig ist, wenn alle Achsen in einer Linie fluchten. Das Stellglied 20 und das zweite Anlenkstück 22 führen dann keine Hin- und Herbewegungen parallel zum Pfeil 40 aus, sondern sie führen mehr oder weniger große Schwenkbewegungen um die Drehachse aus. Die Stellbewegegung in Richtung des Pfeils 40 bedeutet dann zum Beispiel eine Schwenkbewegung in eine Drehrichtung und entgegen Pfeil 40 bedeutet dann eine Schwenkbewegung in entgegengesetzter Richtung. Sämtliche Bauteile können mehr oder weniger rund bzw. bogenförmig gestaltet sein.

Das Stellglied 20 ist, bei einem Ottomotor als Antriebsmaschine 44, üblicherweise zum Beispiel eine schwenkbar gelagerte Drosselklappenwelle mit einer daran befestigten Drosselklappe. Eine besonders elegante Lösung ergibt sich, wenn man die Drosselklappenwelle so anordnet, daß sie auf beiden Seiten aus dem Saugrohr 42 herausragt. Auf einer Seite kann scheibenartig das zweite Anlenkstück 22 angreifen und auf der anderen Seite greift der Stellantrieb 30 an der Drosselklappenwelle an. Da die Abgangswelle des Stellantriebs 20 und das Stellglied 20 normalerweise Schwenkbewegungen ausführen, kann auf die in der Zeichnung symbolhaft dargestellte Zahnung normalerweise verzichtet werden. Die Rückholfeder 14, die Rückstellfeder 24 und/oder die Koppelfeder 26 ist zweckmäßigerweise je eine Biegefeder bzw. Spiralfeder. Ist die Antriebsmaschine 44 zum Beispiel ein Dieselmotor, so kann das Stellglied 20 zum Beispiel eine Regelstange einer Einspritzpumpe des Dieselmotors sein.

Bei der erfindungsgemäßen Motorsteuereinrichtung sind die von dem Stellantrieb 30 aufzuhringenden Kräfte bzw. Stellmomente ziemlich klein. Damit kann in vorteilhafter Weise ein kleiner Stellantrieb 30 verwendet werden, bzw. die Getriebeübersetzung des Getriebes 76 kann klein gewählt werden, bzw. es ergeben sich bei Verstellung des Stellgliedes 20 mit Hilfe des Stellantriebs 30 vorteilhaft kurze Stellzeiten.

Das aus den beiden Betätigungsspielen 78, 80 sich zusammensetzende Spiel ist kleiner als ein maximaler Verstellbereich des Stellgliedes 20. Das Spiel beträgt vorzugsweise etwa ein Drittel des maximalen Verstellbereiches.

Das Bowdenzugseil 56 wird beim Gasgeben über das erste Anlenkstück 10 vom Fahrer und beim Gaszurücknehmen von der Rückstellfeder 24 und dem Stellantrieb 30 (normaler Fahrbetrieb), bzw. von der Rückstellfeder 24 alleine (Notfahrbetrieb) jeweils nach Überwindung der Betätigungsspiele 78, 80 betätigt. Dadurch kann in vorteilhafter Weise z. B. jegliche Feder zum Straffen des Bowdenzugseils 56 entfallen. Der Verzicht auf diese Feder bewirkt in vorteilhafter Weise eine besonders kleine Betätigungskraft in dem Bowdenzugseil 56 und damit eine besonders geringe Reibkraft zwischen dem Bowdenzugseil 56 und dem Bowdenzugmantel 55, denn die Reibkraft steigt in etwa exponentiell mit der Betätigungskraft. Dies macht sich vorteilhaft durch besonders kleine Kräfte bzw. Stellmomente am Fahrpedal 6 und beim Stellantrieb 30 zusätzlich bemerkbar.

## Patentansprüche

1. Motorsteuereinrichtung in einem Fahrzeug, zur Steuerung einer Leistung einer Antriebsmaschine (44), mit einer, ein Fahrpedal (6), und eine das Fahrpedal (6) in eine Ruhestellung zurückholende Rückholfeder (14) umfassenden ersten Steuergruppe (1) und mit einer, ein die Leistung bestimmendes Stellglied (20) mit einem zweiten Anlenkstück (22), ein, das Stellglied (20) in Abhängigkeit von elektrischen Stellsignalen verstellenden Stellantrieb (30) und eine das Stellglied (20) in Richtung kleinerer Leistung beaufschlagenden Rückstellfeder (24) umfassenden zweiten Steuergruppe (2), ferner mit einem eine Stellung des Fahrpedals (6) erfassenden Sollwertgeber (12), sowie mit mechanischen (50) und elektrischen (52) Übertragungsmitteln, über die (50, 52) ein Steuerbefehl von der ersten Steuergruppe (1) auf die zweite Steuergruppe (2) übertragbar ist, wobei die mechanischen Übertragungsmittel (50) einerseits mit dem Fahrpedal (6) über ein durch das Fahrpedal (6) betätigbares erstes Anlenkstück (10) oder über das Fahrpedal und über einen eine Bewegung des ersten Anlenkstücks (10) bzw. des Fahrpedals in Richtung kleinerer Leistung der Antriebsmaschine höchstens unwesentlich behindernden ersten Freilauf (64) und andererseits mit dem zweiten Anlenkstück (22) über einen eine Bewegung des zweiten Anlenkstücks (22) in Richtung größerer Leistung der Antriebsmaschine höchstens unwesentlich behindernden zweiten Freilauf (66) verbunden sind, und wobei die mechanischen Übertragungsmittel (50) zwischen dem ersten Anlenkstück (10) bzw. dem Fahrpedal (6) und dem zweiten Anlenkstück (22) so angeordnet sind, daß zwischen dem ersten Anlenkstück (10) bzw. dem Fahrpedal und dem zweiten Anlenkstück (22) ein Spiel vorhanden ist, wenn eine Stellung des Stellglieds (20) einer Stellung des Fahrpedals (6) entspricht, dadurch gekennzeichnet, daß der Sollwertgeber (12) Bestandteil der ersten Steuergruppe ist und er unbeeinflußbar durch die Freiläufe (64, 66) mit dem Fahrpedal (6) verbunden ist und daß das Spiel ein erstes Betätigungsspiel (78) im Bereich des ersten Freilaufs (64) und ein zweites Betätigungsspiel (80) im Bereich des zweiten Freilaufs (66) umfaßt, wobei bei einer Übertragung eines Steuerbefehls von der ersten Steuergruppe (1) auf die zweite Steuergruppe (2) mit Hilfe der elektrischen Übertragungsmittel (52) in Abhängigkeit einer Bewegungsrichtung des ersten Anlenkstückes (10) bzw. Fahrpedals und in Abhängigkeit einer Bewegungsrichtung des zweiten Anlenkstücks (22) abwechselnd das erste Betätigungsspiel (78) oder das zweite Betätigungsspiel (80) größer als das jeweils andere Betätigungsspiel (78, 80) sein kann.

2. Motorsteuereinrichtung nach Anspruch 1, dadurch gekennzeichnet, daß zwischen dem zweiten Anlenkstück (22) und dem Stellglied (20) eine Trennstelle (82, 83) vorgesehen ist, wobei eine Koppelfeder (26) einerseits auf das zweite Anlenkstück (22) und andererseits auf das Stellglied (20) einwirkt mit dem Bestreben, einen Koppelanschlag (83) des zweiten Anlenkstücks (22) gegen einen Koppelanschlag (82) des Stellgliedes (20) zu betätigen.

3. Motorsteuereinrichtung nach Anspruch 2, dadurch gekennzeichnet, daß die Rückstellfeder (24) an dem zweiten Anlenkstück (22) angreift.

4. Motorsteuereinrichtung nach Anspruch 2 oder 3, dadurch gekennzeichnet, daß bei Verstellung des zweiten Anlenkstücks (22) in Richtung kleinerer Leistung das zweite Anlenkstück (22) an einem Notleerlaufanschlag (28) zur Anlage kommen kann.

5. Motorsteuereinrichtung nach einem der Ansprüche 2 bis 4, dadurch gekennzeichnet, daß das Stellglied (20) entgegen einer Kraft der Koppelfeder (26) mit Hilfe des Stellantriebs (30) in Richtung kleinerer Leistung verstellbar ist, bis das Stellglied (20) an einem Endanschlag (34) zur Anlage kommt.

6. Motorsteuereinrichtung nach einem der vorhergehenden Ansprüche, dadurch gekennzeichnet, daß das Stellglied (20) entgegen einer Kraft der Rückstellfeder (24) mit Hilfe des Stellantriebs (30) in Richtung größerer Leistung verstellbar ist, bis das Stellglied (20) oder das zweite Anlenkstück (22) an einem Vollastanschlag (36) zur Anlage kommt.

7. Motorsteuereinrichtung nach einem der vorhergehenden Ansprüche, dadurch gekennzeichnet, daß das Spiel (78, 80) kleiner ist als ein maximaler Verstellbereich des Stellgliedes (20).

8. Motorsteuereinrichtung nach Anspruch 7, dadurch gekennzeichnet, daß das Spiel (78, 80) etwa ein Drittel des maximalen Verstellbereiches beträgt.

## Claims

1. Engine control device in a vehicle, for controlling a power of a drive machine (44), having a first control group (1) which includes an accelerator pedal (6) and a return spring (14) to return the accelerator pedal (6) into a rest position, and having a second control group (2) which includes an actuating element (20) which determines the power and has a second linkage piece (22), an actuating drive (30) which adjusts the actuating element (20) as a function of electrical actuating signals and a reset spring (24) acting on the actuating element (20) in the direction of smaller power, furthermore having a required value pick-up (12) which records a position of the accelerator pedal (6), and also having mechanical (50) and electrical (52) transmission means by means of which (50, 52) a control instruction can be transmitted from the first control group (1) to the second control group (2), the mechanical transmission means (50) being connected, on the one hand, to the accelerator pedal (6) by means of a first linkage piece (10) which can be actuated by the accelerator pedal (6) or by the accelerator pedal and by a first overrun (64) which hinders, at most, to an unimportant extent a motion of the first linkage piece (10) and of the accelerator pedal in the direction of smaller power of the drive engine and, on the other hand, to the second linkage piece (22) by means of a second overrun (66) which hinders, at most, to an unimportant extent a movement of the second linkage piece (22) in the direction of higher power of the drive engine, and the mechanical transmission means (50) between the first linkage piece (10), or the accelerator pedal (6), and the second linkage piece (22) being arranged in such a way that a clearance is present between the first linkage piece (10), or the accelerator pedal, and the second linkage piece (22) whenever a position of the actuating element (20) corresponds to a position of the accelerator pedal (6), characterized in that the required value pick-up (12) is a constituent part of the first control group and is connected to the accelerator pedal (6) so that it cannot be influenced by the overruns (64, 66) and in that the clearance includes a first actuation clearance (78) in the region of the first overrun (64) and a second actuation clearance (80) in the region of the second overrun (66), it being possible for the first actuation clearance (78) or the second actuation clearance (80) to be alternatively greater than the respectively other actuation clearance (78, 80) in the case of a transmission of a control instruction from the first control group (1) to the second control group (2) with the aid of the electrical transmission means (52) as a function of a motion direction of the first linkage piece (10), or of the accelerator pedal, and as a function of a motion direction of the second linkage piece (22).

2. Engine control device according to Claim 1, characterized in that an interface (82, 83) is provided between the second linkage piece (22) and the actuating element (20), a connecting spring (26) acting, on the one hand, on the second linkage piece (22) and, on the other hand, on the actuating element (20) and attempting to actuate a coupling stop (83) of the second linkage piece (22) against a coupling stop (82) of the actuating element (20).

3. Engine control device according to Claim 2, characterized in that the reset spring (24) acts on the second linkage piece (22).

4. Engine control device according to Claim 2 or 3, characterized in that when the second linkage piece (22) is adjusted in the direction of smaller power, the second linkage piece (22) comes into contact with an emergency idling stop (28).

5. Engine control device according to one of Claims 2 to 4, characterized in that the actuating element (20) can be adjusted in the direction of smaller power against a force of the connecting spring (26) with the aid of the actuating drive (30) until the actuating element (20) comes into contact on an end stop (34).

6. Engine control device according to one of the preceding claims, characterized in that the actuating element (20) can be adjusted in the direction of higher power against a force of the reset spring (24) with the aid of the actuating drive (30) until the actuating element (20) or the second linkage piece (22) comes into contact on a full load stop (36).

7. Engine control device according to one of the preceding claims, characterized in that the clearance (78, 80) is smaller than a maximum adjustment range of the actuating element (20).

8. Engine control device according to Claim 7, characterized in that the clearance (78, 80) is approximately one-third of the maximum adjustment range.

## Revendications

1. Dispositif de contrôle de moteur pour un véhicule automobile, pour commander la puissance d'un moteur (44), comprenant un premier groupe de commande (1) avec une pédale d'accélérateur (6) et un ressort de rappel (14) rappelant la pédale d'accélérateur (6) dans sa position de repos et un second groupe de commande (2) comprenant un organe de réglage (20) qui définit la puissance, avec une seconde pièce d'articulation (22), un actionneur (30) réglant l'organe de réglage (20) en fonction de signaux électriques de réglage et un ressort de rappel (24) sollicitant l'organe de réglage (20) dans le sens d'une réduction de puissance, ainsi qu'un capteur de valeur de consigne (12) détectant la position de la pédale d'accélérateur (6) et des moyens de transmission mécaniques (50) et électriques (52) par lesquels (50, 52), un ordre est transmis du premier groupe de commande (1) au second groupe de commande (2), les moyens de transmission mécaniques (50) étant reliés d'une part à la pédale d'accélérateur (6) par une première pièce d'articulation (10) actionnée par la pédale d'accélérateur (6) ou par la pédale d'accélérateur (6) et une première roue libre (64) ne gênant plus que de manière négligeable le mouvement de la première pièce d'articulation (10) ou de la pédale d'accélérateur dans la direction d'une réduction de puissance du moteur et, d'autre part, avec la seconde pièce d'articulation (22) par une seconde roue libre (66) qui ne gêne au plus que de manière négligeable le mouvement de la seconde pièce d'articulation (22) dans le sens d'une plus grande puissance du moteur, et les moyens de transmission mécaniques (50) sont montés entre la première pièce d'articulation (10) ou la pédale d'accélérateur (6) et la seconde pièce d'articulation (22) pour qu'entre la première pièce d'articulation (10) ou la pédale d'accélérateur et la seconde pièce d'articulation (22) il existe un jeu lorsqu'une position de l'organe de réglage (20) correspond à une position de la pédale d'accélérateur (6), caractérisé en ce que le capteur de valeur de consigne (12) fait partie du premier groupe de commande et est relié à la pédale d'accélérateur (6) sans être influencé par les roues libres (64, 66) et en ce que le jeu englobe un premier jeu de manoeuvre (78) dans la zone de la première roue libre (64) et un second jeu de manoeuvre (80) dans la zone de la seconde roue libre (66), et pour une transmission d'un ordre d'un premier groupe de commande (1) à un second groupe de commande (2) à l'aide de moyens de transmission électriques (52) en fonction d'une direction de mouvement de la première pièce d'articulation (10) ou de la pédale d'accélérateur et en fonction d'une direction de mouvement de la seconde pièce d'articulation (22) en alternance le premier jeu de manoeuvre (78) ou le second jeu de manoeuvre (80) peuvent être plus grands que chaque fois l'autre jeu de manoeuvre (78, 80).

2. Dispositif de commande de moteur selon la revendication 1, caractérisé en ce qu'entre la seconde pièce d'articulation (22) et l'organe de réglage (20) il est prévu une zone de séparation (82, 83), un ressort de couplage (26) agissant d'une part sur la seconde pièce d'articulation (22), et d'autre part sur l'organe de réglage (20) en ayant tendance à actionner une butée de couplage (83) de la seconde pièce d'articulation (22) contre une butée de couplage (82) de l'organe de réglage (20).

3. Dispositif de commande de moteur selon la revendication 2, caractérisé en ce que le ressort de rappel (24) agit sur la seconde pièce d'articulation (22).

4. Dispositif de commande de moteur selon la revendication 2 ou 3, caractérisé en ce qu'au réglage de la seconde pièce d'articulation (22) dans la direction d'une réduction de puissance, la seconde pièce d'articulation (22) arrive en appui contre une butée de roue libre de secours (28).

5. Dispositif de commande de moteur selon l'une des revendications 2 à 4, caractérisé en ce que l'organe de réglage (20) est réglable contre une force d'un ressort de couplage (26) à l'aide d'un actionneur (30) dans le sens d'une réduction de puissance, jusqu'à ce que l'organe de réglage (20) arrive en appui contre une butée de fin de course (34).

6. Dispositif de commande de moteur selon l'une des revendications précédentes, caractérisé en ce que l'organe de réglage (20) peut être réglé contre la force d'un ressort de rappel (24) à l'aide de l'actionneur (30) dans la direction d'une puissance plus grande jusqu'à ce que l'organe de réglage (20) ou la seconde pièce d'articulation (22) arrivent en appui contre une butée de pleine charge (36).

7. Dispositif de commande de moteur selon l'une des revendications précédentes, caractérisé en ce que le jeu (78, 80) est inférieur à la plage maximale de réglage de l'organe de réglage (20).

8. Dispositif de commande de moteur selon la revendication 7, caractérisé en ce que le jeu (78, 80) correspond sensiblement à un tiers de la plage maximale de réglage.
